**Europäisches Patentamt**

**European Patent Office**

**Office européen des brevets**

(11) Numéro de publication : **0 407 270 B1**

(12) # FASCICULE DE BREVET EUROPEEN

(45) Date de publication du fascicule du brevet :
**13.05.92 Bulletin 92/20**

(51) Int. Cl.⁵ : **G06F 1/08**, G06F 1/32

(21) Numéro de dépôt : **90401857.9**

(22) Date de dépôt : **28.06.90**

(54) **Circuit-intégré avec horloge à fréquence variable.**

(30) Priorité : **07.07.89 FR 8909195**

(43) Date de publication de la demande :
**09.01.91 Bulletin 91/02**

(45) Mention de la délivrance du brevet :
**13.05.92 Bulletin 92/20**

(84) Etats contractants désignés :
**BE CH DE GB IT LI NL SE**

(56) Documents cités :
**EP-A- 0 012 232**
**EP-A- 0 012 232**
**EP-A- 0 256 594**
**US-A- 4 691 124**

(73) Titulaire : **SGS-THOMSON
MICROELECTRONICS S.A.
7, Avenue Galliéni
F-94250 Gentilly (FR)**

(72) Inventeur : **Tournier, Christian
c/o Cabinet Ballot-Schmit, 7 rue Le Sueur
F-75116 Paris (FR)**

(74) Mandataire : **Schmit, Christian Norbert Marie
et al
Cabinet Ballot-Schmit 7, rue Le Sueur
F-75116 Paris (FR)**

EP 0 407 270 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention concerne les circuits-intégrés, et plus précisément ceux dont le fonctionnement nécessite une horloge. C'est le cas notamment des microprocesseurs, microcalculateurs et bien d'autres circuits-intégrés.

Les utilisateurs de ces circuits recherchent souvent une vitesse maximale de fonctionnement de ces circuits, afin de disposer de la plus grande puissance de calcul possible pour gérer leurs applications.

Les concepteurs d'applications doivent prendre en compte les possibilités réelles de fonctionnement du circuit à fréquence élevée, pour avoir une sécurité de fonctionnement maximale. Or la vitesse de fonctionnement maximale du circuit dépend non seulement du procédé de fabrication (il y a des technologies donnant des circuits plus ou moins rapides) mais aussi de la tension d'alimentation du circuit : lorsque la tension d'alimentation générale baisse, les temps de montée et descente de signaux logiques augmentent et le circuit devient moins rapide. Il y a des risques de mauvais fonctionnement du circuit.

La tension d'alimentation du circuit peut être trop basse notamment lors de la mise sous tension du circuit, lors de l'arrêt, et lors de microcoupures ou baisses accidentelles de l'alimentation. Il y a donc, au moins pendant ces phases transitoires, un risque de fonctionnement mal maîtrisé du circuit, surtout si le concepteur de l'application n'a pas pris des marges de sécurité suffisantes pour s'assurer du fonctionnement correct du circuit pendant ces phases transitoires.

On connaît dans un autre domaine un appareil de commande d'une charge contrôlée et qui nécessite un circuit externe supplémentaire pour commander une fréquence haute ou basse d'une horloge de l'appareil de commande selon une tension appliquée sur la charge contrôlée (EP-A-0 012 232).

En général, pour maîtriser ces phases transitoires, on est obligé de rajouter de la circuiterie extérieure au circuit-intégré, d'où il résulte des coûts élevés pour l'utilisateur, ces coûts pouvant devenir plus importants que le coût du circuit-intégré lui-même.

Pour résoudre le problème décrit, la présente invention propose un circuit-intégré alimenté par une tension d'alimentation Vcc, comportant une horloge assurant le séquencement des tâches du circuit, caractérisé en ce qu'il comporte un détecteur du niveau de la tension d'alimentation Vcc pour délivrer un signal de commande vers un moyen pour diminuer la fréquence de l'horloge lorsque le niveau de la tension d'alimentation Vcc descend au dessous d'un seuil déterminé.

Ainsi, on adapte la fréquence de fonctionnement du circuit au niveau réel de la tension d'alimentation, ce qui permet de mieux gérer le fonctionnement du circuit dans les moments où la tension d'alimentation est anormalement basse. C'est un élément de circuit interne au circuit intégré qui effectue la modification de fréquence d'horloge au moment voulu.

On prévoit de préférence un détecteur à seuil recevant une fraction de la tension d'alimentation et fournissant un signal de commande lorsque cette tension descend au dessous du seuil déterminé; ce seuil est proche de la valeur de tension d'alimentation pour laquelle on pense que le fonctionnement à fréquence normale risque de ne plus être correct), et un diviseur de fréquence mis en service ou hors service en fonction du signal de commande issu du détecteur.

Le détecteur est de préférence connecté à un registre pour placer dans ce registre un bit drapeau indiquant si la fréquence de l'horloge est diminuée ou non. Ce bit est utilisable par le circuit-intégré lui-même lorsque ce circuit comporte un processeur de signaux. De cette manière, le circuit sait à tout moment son état de fonctionnement et les programmes de calcul ou de traitement de signaux en cours d'exécution peuvent tenir compte de la fréquence de fonctionnement réelle du circuit.

Dans le cas d'un circuit-intégré comportant un microprocesseur, le détecteur qui engendre l'ordre de changement de fréquence peut fournir au microprocesseur un signal de demande d'interruption qui permet au microprocesseur d'exécuter immédiatement une modification du programme en cours d'exécution.

Dans une variante de l'invention, on peut prévoir éventuellement qu'il y a plusieurs détecteurs à seuil, avec des seuils différents, et plusieurs diviseurs de fréquence pour donner à l'horloge plusieurs fréquences différentes correspondant respectivement à plusieurs gammes de valeurs de tension d'alimentation.

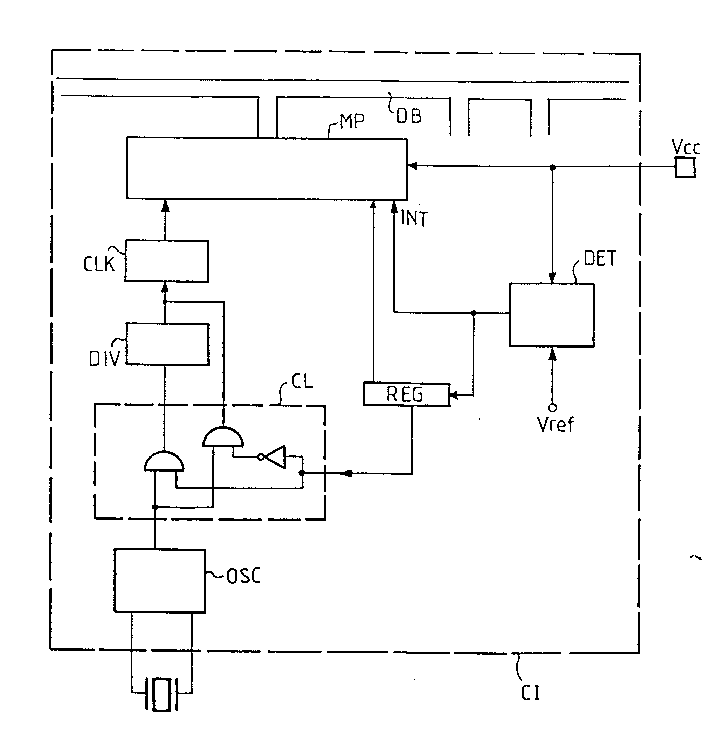

D'autres caractéristiques et avantages de l'invention apparaîtront à la lecture de la description détaillée qui suit et qui est fait en référence au dessin annexé dans lequel la figure unique représente un mode de réalisation de l'invention.

La réalisation représentée à la figure unique est une réalisation particulièrement simple de l'invention.

Le circuit-intégré CI pris à titre d'exemple comporte un microprocesseur MP piloté par une horloge CLK. Le microprocesseur peut communiquer avec d'autres éléments du même circuit-intégré ou avec des ports d'entrée-sortie du circuit (non représentés) par l'intermédiaire d'un bus de données DB.

Le microprocesseur est alimenté par une tension d'alimentation Vcc qui est la tension d'alimentation générale du circuit-intégré.

L'horloge CLK qui pilote le microprocesseur établit des signaux de séquencement à une fréquence qui est déterminée par un oscillateur OSC. Cet oscillateur peut par exemple utiliser un quartz extérieur au circuit-intégré, mais il pourrait aussi être une oscillateur entièrement interne.

Selon l'invention, la fréquence de l'horloge peut être modifiée automatiquement en fonction de la tension d'alimentation Vcc, et cela grâce à un circuit de modification de fréquence intégré dans le circuit CI.

Pour cela on prévoit de préférence un diviseur de fréquence DIV, inséré entre l'oscillateur OSC et le circuit d'horloge CLK. Ce diviseur de fréquence est ou non mis en service en fonction de la valeur de la tension d'alimentation Vcc.

Pour cela, un détecteur de niveau de tension d'alimentation est prévu. Ce détecteur est désigné par la référence DET. Il compare la tension d'alimentation à un seuil déterminé. En pratique, on peut prévoir que le détecteur comprend un pont diviseur recevant la tension Vcc et définissant une fraction kVcc de cette tension Vcc et un comparateur recevant la tension kVcc issue du pont diviseur et une tension de référence Vref, pour fournir un signal logique haut ou bas selon que kVcc est supérieur ou inférieur à Vref.

Le niveau logique de sortie du détecteur DET peut être mis en mémoire dans un registre REG. Ce registre sert de mémoire du niveau actuel (normal ou insuffisant) de la tension Vcc. Le bit drapeau qu'il contient peut être lu par le microprocesseur MP lors d'étapes de vérification du fonctionnement du circuit.

Par ailleurs, la sortie du détecteur DET est appliquée à un circuit logique CL permettant de mettre en service ou non le diviseur de fréquence DIV. Lorsque la tension Vcc est normale, le diviseur de fréquence n'est pas mis en service; l'horloge CLK reçoit directement la fréquence issue de l'oscillateur OSC. Lorsque la tension Vcc est insuffisante, l'horloge CLK reçoit une fréquence issue du diviseur de fréquence DIV qui lui-même reçoit la fréquence de l'oscillateur.

Par exemple, le diviseur de fréquence est un diviseur par 2. Mais on pourrait imaginer d'autres solutions dans laquelle la division par un facteur Q quelconque (pas forcément entier) serait utilisée. Dans ce cas le détecteur à seuil mettrait en service soit un premier diviseur soit un deuxième diviseur selon le niveau de Vcc. Le facteur Q serait alors le rapport entre les divisions effectuées par le premier et le second diviseur.

Le seuil de tension d'alimentation Vcc au dessous duquel la fréquence doit être diminuée est choisi de telle sorte qu'il corresponde encore à un fonctionnement correct du circuit à la fréquence normale d'horloge.

La tension de référence Vref qui sert à établir ce seuil peut être réalisée soit avec des composants externes au circuit intégré soit avec des composants internes (tensions de seuil de transistors, tensions de coude de diodes, tensions proportionnelles au bandgap du semiconducteur, etc.).

Dans le cas où le circuit intégré comporte un processeur de traitement de signaux, on peut tout-à-fait prévoir que ce processeur peut recevoir une interruption en provenance du détecteur lorsque celui-ci émet un signal de commande de changement de fréquence. Un conducteur à été représenté à cet effet sur la figure entre la sortie du détecteur et une entrée d'interruption INT du microprocesseur MP. Une interruption peut être générée dans les deux sens de changement de fréquence : passage vers une fréquence plus basse et passage vers une fréquence plus haute. Cette interruption peut permettre le déclenchement de l'exécution d'une modification du programme en cours.

Si on le désire, on peut compliquer le circuit en prévoyant plus de deux fréquences de travail différentes, chaque fréquence correspondant à une gamme respective de valeurs de tension d'alimentation Vcc. Dans ce cas, il y a plusieurs détecteurs de niveau de tension et plusieurs diviseurs de fréquence.

Dans une variante de réalisation, on n'utilise pas de diviseur de fréquence. L'oscillateur est directement contrôlable en fréquence, grâce à un registre de contrôle. Le contenu du registre commande l'oscillateur pour définir la fréquence de ce dernier. Par exemple, pour un oscillateur à relaxation utilisant la charge et la décharge périodiques d'une capacité, on peut prévoir que le courant de charge et décharge ou la valeur de la capacité sont modifiés en fonction du contenu du registre.

Dans ce cas, la sortie du détecteur de niveau de tension d'alimentation place un bit (bit drapeau) dans le registre de contrôle de l'oscillateur; la fréquence fournie par l'oscillateur est fonction de la présence ou l'absence du bit drapeau dans le registre.

**Revendications**

1. Circuit-intégré alimenté par une tension d'alimentation Vcc, comportant une horloge (CLK) assurant le séquencement des tâches du circuit, caractérisé en ce qu'il comporte un détecteur (DET) du niveau de la tension d'alimentation Vcc pour délivrer un signal de commande vers un moyen (DIV) pour diminuer la fréquence de l'horloge lorsque le niveau de la tension d'alimentation Vcc descend en dessous d'un seuil déterminé.

2. Circuit-intégré selon la revendication 1, caractérisé en ce que le détecteur (DET) est un détecteur à seuil recevant une fraction de la tension d'alimentation, et que le moyen pour diminuer la fréquence de l'horloge est un diviseur de fréquence (DIV) mis en service ou hors service en fonction du signal de commande issu du détecteur.

3. Circuit-intégré selon la revendication 2, caractérisé en ce que le détecteur est connecté à un registre (REG) pour placer dans ce registre un bit drapeau indiquant si la fréquence de l'horloge est diminuée ou non.

4. Circuit-intégré selon l'une des revendications 1 à 3, comportant un microprocesseur, caractérisé en ce que le détecteur qui engendre l'ordre de changement de fréquence peut fournir au microprocesseur un signal de demande d'interruption permettant au microprocesseur d'exécuter immédiatement une modification du programme en cours d'exécution.

5. Circuit-intégré selon l'une des revendications précédentes, caractérisé en ce que plusieurs détecteurs à seuil sont prévus, avec des seuils différents, et plusieurs diviseurs de fréquence pour donner à l'horloge plusieurs fréquences différentes correspondant respectivement à plusieurs gammes de valeurs de tension d'alimentation.

## Claims

1. An integrated circuit supplied by a supply voltage Vcc, comprising a clock (CLK) ensuring sequencing of the jobs of the circuit, characterized in that it comprises a detector (DET) for the level of the supply voltage Vcc in order to deliver a command signal to a means (DIV) to reduce the frequency of the clock when the level of the supply voltage Vcc goes below a predetermined threshold.

2. The integrated circuit as claimed in claim 1, characterized in that the detector (DET) is a threshold detector receiving a fraction of the supply voltage and in that the means for reducing the frequency of the clock is a frequency divider (DIV) put into operation or out of operation as a function of the command signal from the detector.

3. The integrated circuit as claimed in claim 2, characterized in that the detector is connected with a register (REG) for loading this register with a flag bit indicating if the frequency of the clock is reduced or not.

4. The integrated circuit as claimed in any one of the preceding claims 1 through 3, comprising a microprocessor, characterized in that the detector which produces the order for the change in frequency can supply the microprocessor with an interrupt request signal rendering it possible for the microprocessor to directly execute a modification of the program being run.

5. The integrated circuit as claimed in any one of the preceding claims, characterized in that a plurality of threshold detectors are provided, which have different thresholds, and a plurality of frequency dividers are provided in order to provide the clock with a plurality of different frequencies corresponding respectively to a plurality of scales of supply voltage values.

## Patentansprüche

1. Integrierte Schaltung, die mit einer Versorgungsspannung Vcc versorgt wird, mit einem Taktgeber (CLK), der die Abfolge der Aufgaben der Schaltung gewährleistet, dadurch gekennzeichnet, daß sie einen Detektor (DET) für den Pegel der Versorgungsspannung Vcc aufweist, um an ein Mittel zum Absenken der Taktfrequenz ein Steuersignal zu liefern, wenn der Pegel der Versorgungsspannung Vcc unter einen bestimmten Schwellenwert fällt.

2. Integrierte Schaltung gemäß Anspruch 1, dadurch gekennzeichnet, daß der Detektor (DET) ein Schwellenwertdetektor ist, der einen Bruchteil der Versorgungsspannung empfängt, und daß das Mittel zum Erniedrigen der Taktfrequenz ein Frequenzteiler (DIV) ist, der in Abhängigkeit vom vom Detektor gelieferten Steuersignal in Betrieb oder außer Betrieb gesetzt wird.

3. Integrierte Schaltung gemäß Anspruch 2, dadurch gekennzeichnet, daß der Detektor mit einem Register (REG) verbunden ist, um in diesem Register ein Merkerbit zu setzen, das angibt, ob die Taktfrequenz erniedrigt ist oder nicht.

4. Integrierte Schaltung gemäß einem der Ansprüche 1 bis 3, die einen Mikroprozessor aufweist, dadurch gekennzeichnet, daß der Detektor, der die Reihenfolge der Frequenzänderung erzeugt, an den Mikroprozessor ein Signal für die Anforderung einer Unterbrechung liefern kann, das dem Mikroprozessor erlaubt, im Verlauf der Abarbeitung des Programms direkt eine Abwandlung desselben auszuführen.

5. Integrierte Schaltung gemäß einem der vorangehenden Ansprüche, dadurch gekennzeichnet, daß mehrere Schwellenwertdetektoren mit unterschiedlichen Schwellenwerten und mehrere Frequenzteiler vorgesehen sind, um an den Taktgeber mehrere verschiedene Frequenzen zu liefern, die jeweils mehreren Bereichen der Werte der Versorgungsspannung entsprechen.